# EUROPÄISCHE PATENTSCHRIFT

(11) **EP 2 096 520 B1**
(45) Veröffentlichungstag und Bekanntmachung des Hinweises auf die Patenterteilung: **04.07.2012**
(21) Anmeldenummer: 08075146.4
(22) Anmeldetag: 26.02.2008
(51) Int. Cl.: G06F 3/01, A63H 3/00, H04M 1/725, H04M 19/04

(54) **Mobilfunkgerät und Verfahren zum Betreiben**
Mobile radio unit and operation method
Dispositif de communications mobile et procédé de fonctionnement

(43) Veröffentlichungstag der Anmeldung: 02.09.2009
(73) Patentinhaber: Deutsche Telekom AG, 53113 Bonn (DE); Technische Universität Berlin, 10623 Berlin (DE)
(72) Erfinder: Hemmert, Fabian, 12103 Berlin (DE)
(74) Vertreter: Drosch, Ulrich

(56) Entgegenhaltungen:
- WO-A-2004/038573
- WO-A-2004/053830
- WO-A-2004/071113
- WO-A-2007/033245
- US-A1- 2003 080 987
- US-A1- 2004 110 527

## Beschreibung

Die Erfindung betrifft ein Verfahren zum Betreiben eines Mobilfunkgerätes, welches darauf gerichtet ist, einem Benutzer unterschiedliche Betriebszustände des betreffenden Gerätes zu signalisieren. Ferner betrifft die Erfindung ein zur Durchführung des Verfahrens ausgebildetes Mobilfunkgerät, bei welchem es sich um ein Mobiltelefon, oder um ein Smartphone handelt. Gemäß der Erfindung soll der Benutzer eines Mobilfunkgerätes durch das Erlangen seiner bewussten und seiner unbewussten Aufmerksamkeit in Kenntnis über unterschiedliche Betriebszustände des Gerätes gesetzt werden.

Zur Signalisierung unterschiedlicher Betriebszustände von Mobilfunkgeräten mobilen Geräten werden nach dem Stand der Technik zumeist visuelle, auditive oder audiovisuelle Wahrnehmungskanäle ihrer Benutzer angesprochen. Verschiedene Betriebszustände der Geräte werden den Benutzern danach beispielsweise auf einem Display, durch das Blinken einer Leuchtdiode oder durch unterschiedliche akustische Signal- und/oder Warntöne signalisiert. Sofern jedoch der Benutzer sein Mobilfunkgerät beispielsweise in seiner Bekleidung bei sich trägt, werden entsprechende visuelle Signale von ihm gar nicht, aber auch akustische Signale häufig nicht wahrgenommen. Zudem sind akustische Signale, etwa beim Aufenthalt in einem Restaurant oder während eines Kino- oder Theaterbesuches, vielfach nicht erwünscht. Daher werden Betriebszustände von Mobilfunkgeräten ihrem jeweiligen Benutzer häufig auch über taktile Reize signalisiert. Bei Mobiltelefonen ist dabei der so genannte Vibrationsalarm gebräuchlich.

Die US 2004/110527 betrifft zum Beispiel ein entsprechendes Mobiltelefon. Das in der Druckschrift beschriebene Telefon ist so gestaltet, dass einem Nutzer unterschiedliche Betriebszustände des Gerätes zum Beispiel durch Vibrationen unterschiedlicher Frequenz und/oder Amplitude signalisiert werden.

Den zuvor erläuterten und in der Praxis anzutreffenden Lösungen ist gemeinsam, dass den Benutzern von Mobilfunkgeräten mittels der optischen, akustischen oder taktilen Signale jeweils nur der Eintritt besonderer beziehungsweise kritischer Betriebszustände signalisiert wird. So wird bei Mobiltelefonen beispielsweise ein eingehender Anruf durch einen Vibrationsalarm oder ein fast entladener .

Akkumulator durch einen akustischen Wamton signalisiert. Andererseits wird ein "normaler" Betriebszustand beziehungsweise Ruhezustand eines entsprechenden Mobilfunkgerätes, also ein Zustand, in dem das Mobiltelefon empfangsbereit, ist, jedoch augenblicklich kein Anruf eingeht, und in dem sein Akkumulator aufgeladen ist durch das Gerät nicht signalisiert. Insbesondere im Hinblick auf den Vibrationsalarm sind aber bereits Nachteile beziehungsweise Probleme einer solchen Verfahrensweise bekannt geworden.

So wird beispielsweise unter http://jscms.jrn.columbia.edu/cns/2005-05-03/orsophantomvibes/ auf einen von Joe Orso unter dem Titel "Who's calling? is it your leg or your cell phone?" veröffentlichten Artikel aus dem Jahre 2005 hingewiesen, wonach Benutzer mit einem Vibrationsalarm ausgestatteter Mobilfunkgeräte zuweilen oder bei krankhafter Steigerung gegebenenfalls auch fortwährend in ihrer Wahmehmung getäuscht werden und so genannte Phantomvibrationen wahrnehmen, so dass sie trotz des Ausbleibens eines tatsächlichen Vibrationsalarms meinen, einen eingehenden Anruf wahrzunehmen. Nach den Darlegungen des genannten Artikels unterliegen insbesondere Benutzer von Mobilfunkgeräten, welche einen wichtigen Anruf erwarten, nicht selten derartigen Wahrnehmungstäuschungen. Dies kann von den betreffenden Nutzem als sehr unangenehm beziehungsweise störend empfunden werden.

Aufgabe der Erfindung ist es daher, die vorgenannten Nachteile zu vermeiden. Die Aufgabe besteht insbesondere darin, ein Verfahren zum Betreiben eines Mobilfunkgerätes anzugeben, durch welches der Benutzer eines entsprechenden Gerätes über die Erlangung seiner bewussten und/oder unbewussten Aufmerksamkeit unauffällig über unterschiedliche Betriebszustände seines Gerätes informiert wird. Die Aufgabe besteht ferner darin, ein zur Durchführung des Verfahrens geeignetes Mobilfunkgerät bereitzustellen.

Die Aufgabe wird durch ein Verfahren mit den Merkmalen des Hauptanspruchs gelöst. Ein die Aufgabe lösendes und zur Durchführung des Verfahrens geeignetes Mobilfunkgerät ist durch die Merkmale des ersten Sachanspruchs charakterisiert. Vorteilhafte Aus- beziehungsweise Weiterbildungen der Erfindung sind durch die Unteransprüche gegeben.

Das vorgeschlagene Verfahren zum Betreiben eines Mobilfunkgerätes betrifft gemäß der Aufgabenstellung ein Verfahren, nach welchem das Mobilfunkgerät einem Benutzer unterschiedliche Betriebszustände signalisiert, welche durch in oder an dem Gerät wirkende physikalische Parameter repräsentiert werden. Dabei werden die jeweiligen Betriebszustände des Mobilfunkgerätes von einer Zentralverarbeitungseinheit des Gerätes auf der Grundlage einer Bewertung der entsprechenden physikalischen Parameter bestimmt.

Erfindungsgemäß ist das Verfahren so gestaltet, dass durch das Mobilfunkgerät sowohl ein als Ruhe- beziehungsweise Bereitschaftszustand definierter Betriebszustand, welcher von einem Benutzer des Gerätes durch keine andere Aktivität des Gerätes wahrnehmbarer ist, als auch mindestens ein davon abweichender Betriebszustand signalisiert wird. Dabei werden die vorgenannten Betriebszustände jeweils durch mindestens einen, von der Zentralverarbeitungs-einheit des Mobilfunkgerätes aufgrund des von ihr jeweils erkannten Betriebszustandes angesteuerten Aktor in Form eines durch den Benutzer wahrnehmbaren taktilen Reizes signalisiert.

Anders als bei Mobilfunkgeräten nach dem Stand der Technik, werden demnach erfindungsgemäß nicht nur besondere Betriebszustände des Geräts, wie sie beispielsweise durch das Eintreten eines in dem Gerät gespeicherten Termins oder den Eingang eines Telefonanrufs gegeben sind, signalisiert, sondern der Benutzer des Mobilfunkgerätes wird durch entsprechende taktile Reize auch ständig darüber unterrichtet, dass sich das Gerät in Abwesenheit besonderer Betriebszustände in einem Ruhezustand befindet. Hierzu wird durch entsprechende, von der Zentralverarbeitungseinheit gesteuerte Aktoren des Mobilfunkgerätes im Ruhezustand beziehungsweise Bereitschaftszustand des Geräts (es wird weder ein Termin signalisiert, noch ein eingehender Anruf oder etwa ein zu niedriger Ladezustand eines Akkumulators des Geräts) ein periodischer taktiler Reiz auf den Benutzer des Gerätes ausgeübt. Das heißt, auch bei sonstiger Inaktivität des Mobilfunkgeräts erhält sein Benutzer eine Information über diesen Betriebszustand in Form eines taktilen Reizes.

Das erfindungsgemäße Verfahren ist dabei so gesteltet, dass die Signalisierung der Betriebszustände des Mobilfunkgerätes durch eine Animation der menschlichen Lebensfunktionen Atmung und/oder Puls- oder Herzschlag und/oder Muskeltätigkeit erfolgt. Hierzu simulieren von der Zentralverarbeitungseinheit des Geräts gesteuerte Aktoren durch eine entsprechende Bewegung des Mobilfunkgerätes oder einzelner Bestandteile des Mobilfunkgerätes das Heben und Senken des Brustkorbs und/oder den Herz- oder Pulsschlag und/oder die Spannung eines Muskels.

Eine vergleichbare Animation von Lebensfunktionen ist bisher nur im Zusammenhang mit Computern oder Geräten bekannt, bei denen durch eine ablaufende Software ein virtuelles Tier im Rahmen eines Computer- oder Videospiels animiert wird, wie zum Beispiel in der US 2003/080987 A1 beschrieben. Idee der Erfindung ist es aber, ein Mobilfunkgerät so zu betreiben beziehungsweise auszustatten, dass dieses seine Betriebszustände durch derartige Animationen signalisiert.

Entsprechend einer dabei vorgesehenen Ausbildungsform wird beispielsweise ein oberhalb eines vorgegebenen Schwellwertes liegender Ladezustand mindestens eines Akkumulators oder einer Batterie des Mobilfunkgerätes durch die Animation einer durchschnittlichen Atemfrequenz und/oder einer durchschnittlichen Puls- oder Herzfrequenz eines Menschen signalisiert. Im Gegensatz dazu ist es vorgesehen, dass in diskreten Intervallen unterhalb des vorgenannten Schwellwertes liegende Ladezustände des Akkumulators oder der Batterie durch Animation einer sich mit verringernder Ladung des Akkumulators oder der Batterie von Ladezustandsintervall zu Ladezustandsintervall verlangsamenden Atmung und/oder durch die Animation eines sich jeweils verlangsamenden Pulses oder Herzschlags signalisiert werden.

Die Animation niedriger werdender Ladezustände des Akkumulators oder der Batterie kann zudem dadurch erfolgen, dass sich mit sinkender Akkuladung die Amplitude einer das Heben und Senken des Brustkorbs simulierenden Bewegung eines Geräteteils vergrößert. Hierdurch wird der sinkende Ladezustand im Sinne eines tiefen oder schweren Ein- und Ausatmens animiert. Gemäß den vorstehenden Darstellungen zur Signalisierung von Ladezuständen des Akkumulators oder der Batterie des Mobilfunkgerätes wird demnach ein Betriebszustand, bei dem lediglich der Ladezustand verringert ist, das heißt unter einem Schwellwert liegt, nicht als Ruhezustand im Sinne der Erfindung angesehen, selbst wenn dieser Betriebszustand vom Benutzer durch keine andere Aktivität des Mobilfunkgeräts als die Signalisierung eben dieses Ladezustands wahrgenommen wird.

Entsprechend einer Weiterbildung des erfindungsgemäßen Verfahrens ist es vorgesehen, dass das Mobilfunkgerät seinem Benutzer das Verpassen eines bestimmten Ereignisses durch eine entsprechende Animation signalisiert. Danach wird im Falle dessen, dass der Benutzer des Gerätes innerhalb einer vorgegebenen Zeitspanne nicht die Kenntnisnahme eines ihm an dem Mobilfunkgerät signalisierten Ereignisses bestätigt, ein Versäumnis dieses Ereignisses durch die Animation eines erregten Zustandes in Form einer beschleunigten Atmung und/oder eines beschleunigten Puls- oder Herzschlags signalisiert. Dabei kann der Eintritt des Ereignisses selbst in herkömmlicher Weise akustisch und/oder visuell und/oder taktil, das heißt beispielsweise durch eine Displayanzeige und/oder einen Rufbeziehungsweise Warnton und/oder durch einen Vibrationsalarm signalisiert werden. Das Ausbleiben der Bestätigung einer Kenntnisnahme des Ereigniseintritts durch den Benutzer des Mobilfunkgerätes wird dann nach Ablauf der vorgegebenen Zeitspanne durch eine Animation wie angegeben signalisiert. Die Zeitspanne, nach welcher die Nichtbestätigung eines eintretenden Ereignisses als Versäumnis durch das Mobilfunkgerät beziehungsweise dessen Zentralverarbeitungseinheit bewertet und signalisiert wird, kann vorzugsweise durch den Benutzer an dem Gerät über ein entsprechendes Konfigurationsmenü festgelegt werden.

Bei dem zuvor genannten (versäumten) Ereignis kann es sich beispielsweise um einen durch das Mobilfunkgerät signalisierten Termin oder um einen vom Benutzer nicht zur Kenntnis genommenen eingehenden Telefonanruf handeln. Die Signalisierung kann dabei derart gestaltet sein, dass die Animation der beschleunigten Atmung und/oder des beschleunigten Puls- oder Herzschlags nur für eine vorgebbare Zeitdauer erfolgt und die Atmung und/oder der Puls- oder Herzschlag danach wieder in der dem Ruhezustand entsprechenden Weise erfolgt beziehungsweise animiert wird. Das Verfahren kann darüber hinaus so ausgebildet sein, dass für die Dauer des Ausbleibens einer Bestätigung der Kenntnisnahme des betreffenden eingetretenen Ereignisses ein wiederholter Wechsel zwischen der Animation des erregten Zustandes und des Ruhezustandes des Mobilfunkgerätes erfolgt.

Gemäß einer Ausbildungsform der Erfindung ist es vorgesehen, im Falle des Fehlens eine Netzverbindung des Gerätes zu einer Basisstation eines Mobilfunkproviders, diesen Betriebszustand ebenfalls durch die Animation einer Lebensfunktion zu signalisieren. Entsprechend einer dafür vorgesehenen Verfahrensweise wird das Fehlen der Netzverbindung durch die Animation einer ein- oder mehrmaligen, kurzzeitigen Muskelkontraktion oder durch die Animation einer einmaligen, länger anhaltenden, krampfartigen Muskelkontraktion signalisiert. Im letztgenannten Fall kann die Animation zudem durch ein Zittern begleitet sein. Dabei wird die Muskelkontraktion dadurch signalisiert, dass sich Teile des Gerätegehäuses durch die Betätigung entsprechender Aktoren aufeinander zu bewegen. Ein gegebenenfalls zusätzlich animiertes Zittern kann beispielsweise mittels eines normalen Vibrationsalarms animiert werden.

Ein jeweiliger Betriebszustand, der durch die Erfassung und Auswertung in oder an dem Mobilfunkgerät wirkender physikalischer Parameter bestimmt wird, kann erfindungsgemäß über eine Zuordnungstabelle oder mittels eine Bayesschen Netzwerks in Bewegungsmuster zur Ansteuerung der taktil wirkenden Aktoren umgesetzt werden. Dabei erfolgen sowohl die Erfassung als auch die Auswertung sowie die entsprechende Ansteuerung der Aktoren durch die Zentralverarbeitungseinheit des Gerätes. Die Umsetzung der Bewegungsmuster bezüglich ihrer Entsprechung zu den Betriebszuständen kann entweder werksseitig in dem Mobilfunkgerät konfiguriert sein oder zur Laufzeit des Gerätes generiert werden.

Das die Aufgabe lösende und zur Durchführung des Verfahrens geeignete Mobilfunkgerät, welches als Mobiltelefon oder Smartphone ausgebilder ist, weist mindestens eine Zentralverarbeitungseinheit und mindestens einen zur Signalisierung von Betriebszuständen des Gerätes dienenden Aktor auf. Dabei ist die Zentralverarbeitungseinheit für die Erkennung unterschiedlicher Betriebszustände zur Auswertung der diese Betriebszustände repräsentierenden, an oder in dem Mobilfunkgerät wirkenden physikalischen Parameter sowie zur Ansteuerung des oder der Aktoren zur Signalisierung der Betriebszustände ausgebildet. Durch mindestens einen der Aktoren werden Bewegungen an oder in dem Mobilfunkgerät erzeugt, welche durch einen Benutzer des Gerätes als taktile Reize wahrnehmbar sind. Erfindungsgemäß ist das Mobilfunkgerät dabei derart ausgebildet, dass mindestens ein taktil wirkender Aktor, aufgrund entsprechender Ansteuerung durch die Zentralverarbeitungseinheit, in einem als Ruhezustand definierten, von einem Benutzer des Mobilfunkgeräts durch keine andere Aktivität des Gerätes wahrnehmbaren Betriebszustand aktiv ist. Dies meint , dass dessen Benutzer auch dann eine Information über den Betriebszustand des Gerätes erhält, wenn sich dieses lediglich im Zustand der Empfangsbereitschaft befindet, wenn also an ihm weder ein Anruf eingeht noch ein verminderter Ladezustand des Akkumulators eine Signalisierung erfordert. Dem erfindungsgemäßen Verfahren folgend, ist das Mobilfunkgerät derart ausgebildet, dass dieses mindestens über einen Aktor verfügt, durch welchen Teile des Gerätes zur Animation menschlicher Lebensfunktionen bewegt werden. Mittels dieses oder dieser Aktoren werden dazu das Heben und Senken des Brustkorbs und/oder der Herz- oder Pulsschlag und/oder die Spannung eines Muskels simuliert. Zur Animation der Atmung weist das Mobilfunkgerät entsprechend einer besonders bevorzugten Ausbildungsform mindestens eine vollständig oder in einem Abschnitt flexibel beziehungsweise elastisch ausgebildete Gehäusewand auf. Diese bildet zusammen mit einem von der Zentralverarbeitungseinheit gesteuerten, aus dem Innern des Mobilfunkgerätes wiederholt gegen die flexible Wand beziehungsweise gegen den flexiblen Abschnitt bewegten Betätigungsmittel einen Aktor aus. Durch diesen Aktor wird das Heben und Senken eines Brustkorbs im Rhythmus des sich gegen die flexible beziehungsweise elastische Wand oder gegen den entsprechenden Wandabschnitt bewegenden Betätigungsmittels simuliert. Gemäß einer vorgesehenen Ausbildungsform handelt es sich bei dem genannten Betätigungsmittel um einen durch die Welle eines Servomotors betätigen Exzenterarm. Bei einer weiteren vorgesehenen Ausbildungsform des erfindungsgemäßen Mobilfunkgerätes sind in diesem zur Animation des Herzschlags zwei Schrittmotoren mit je einer an deren Antriebswelle montierten Exzenterscheibe angeordnet. Je nach Ausbildungsform des Gerätes kann dieses wahlweise einen der zuletzt beschriebenen Aktoren (einen Aktor zur Simulation der Atmung oder einen Aktor zu Simulation des Herzschlags) oder auch in Kombination beide Aktoren aufweisen.

Details der Erfindung sollen nachfolgend nochmals kurz in einem Ausführungsbeispiel erläutert werden. In den zugehörigen Zeichnungen zeigen:
- Fig. 1:: die schematische Darstellung von Teilen eines erfindungsgemäß ausgebildeten Mobilfunkgerätes,
- Fig. 2:: ein Funktionsschema des Mobilfunkgerätes nach Fig. 1.

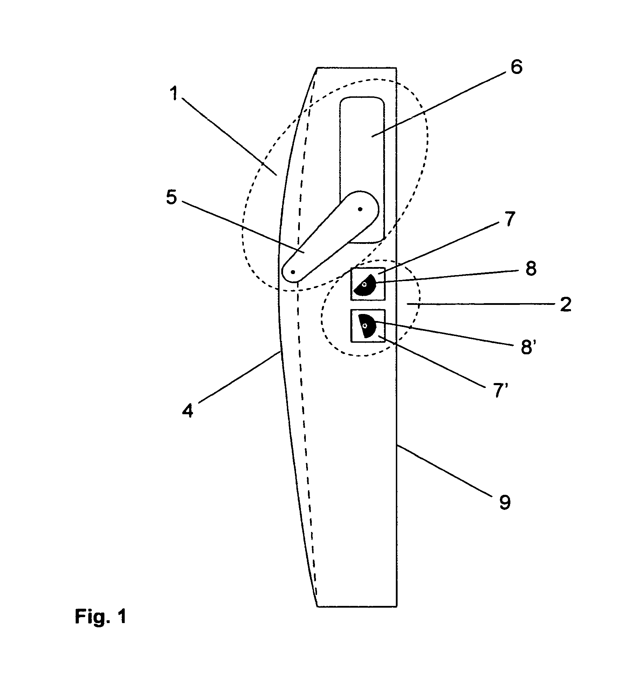

Die Fig. 1 zeigt Teile eines erfindungsgemäß ausgebildeten Mobilfunkgerätes in einer stark schematisierten Darstellung. Das schematisch dargestellte Mobilfunkgerät ist gemäß der Fig. 1 mit mindestens zwei Aktoren 1, 2 ausgestattet, welche Betriebszustände des Gerätes durch von einem Benutzer wahrnehmbare taktile Reize signalisieren. Durch einen ersten Aktor 1 wird dabei der jeweilige Betriebszustand durch die Animation der menschlichen Atmung signalisiert. Der Aktor 1 ist durch die Rückwand 4 des Gerätes, welche aus einem flexiblen Material besteht, durch einen Exzenterarm 5 und einen den Exzenterarm 5 über eine Welle im Rhythmus der animierten Atmung gegen die flexible Rückwand 4 bewegenden Servomotor 6 gebildet. Durch das periodische Bewegen des Exzenterarmes gegen die flexible beziehungsweise elastische Rückwand 4 des Mobilfunkgerätes bewegt sich die Rückwand 4 im Wechsel nach außen und wieder nach innen, der anderen Außenwand 9 entgegen. Hierdurch wird einem Benutzer des Gerätes der Eindruck vermittelt, dass dieses Gerät atmet. Der solchermaßen gestaltete Aktor 1 wird von eine in der Darstellung nicht gezeigten Zentralverarbeitungseinheit 3 des Mobilfunkgerätes mobilen Geräts auch in dessen Grundbeziehungsweise Ruhezustand angesteuert. Der somit auch im Ruhezustand des Mobilfunkgerätes aktive Aktor 1 animiert diesen Zustand durch Simulation einer gleichmäßigen und ruhigen Atmung, wobei sich die flexible Rückwand 4 des Geräts entsprechend dem Rhythmus des Hebens und Senkens des Brustkorbs einer ausgeruhten und nicht in Erregung befindlichen Person bewegt. Dem Benutzer wird hierdurch signalisiert, dass das Gerät in Empfangsbereitschaft ist, sein Akkumulator über eine ausreichende Ladung verfügt und das Gerät in diesem Moment keine weiteren Aktivitäten ausführt. Darüber hinaus verfügt das dargestellte Mobilfunkgerät über einen Aktor 2, mittels welchem der als Doppelschlag wahrnehmbare Herzschlag eines Menschen animiert wird. Der betreffende Aktor 2 ist, wie aus der Figur ersichtlich, durch zwei Schrittmotoren 7, 7' gebildet, auf deren Antriebswelle je eine Exzenterscheibe 8, 8 angeordnet ist. Durch entsprechendes kurzes, periodisches Ansteuern der Schrittmotoren 7, 7' entsteht ein Ruckeln, welches ähnlich dem Herzschlag wahrgenommen wird. Entsprechend einer bereits beschriebenen Ausbildungsform kann die mittels der Aktoren 1, 2 realisierte Animation derart sein, dass sich beispielsweise die Atmung und der Herzschlag mit abnehmender Ladung eines Geräteakkumulators verlangsamen. Der Eintritt eines Ereignisses, wie beispielsweise der Eingang eines Telefonanrufs, beziehungsweise dessen Nichtbestätigung (also Annahme oder Abweisen des Anrufs) durch den Benutzer, kann bei dem dargestellten Mobiltelefon beispielsweise dadurch signalisiert werden, dass die Atmung und der Herzschlag durch die Aktoren 1, 2 mit einer erhöhten Frequenz animiert werden.

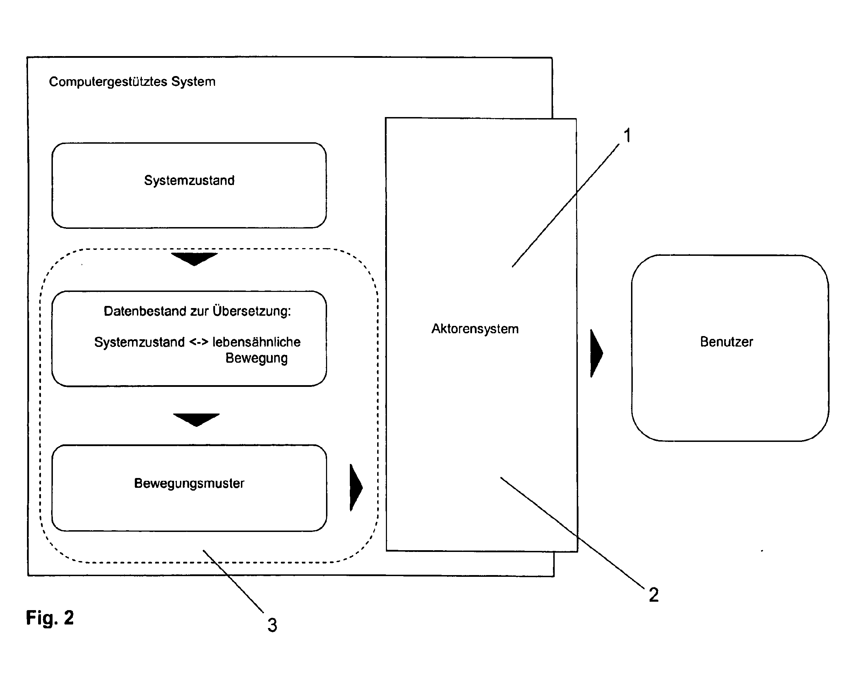

Die Fig. 2 zeigt ein grundsätzliches Funktionsschema des Mobilfunkgerätes nach der Fig. 1. Das computergestützte, also mit einer Zentralverarbeitungseinheit 3 ausgestattete Gerät verfügt über ein System von Aktoren (Aktoren 1, 2 und gegebenenfalls weitere), welche durch die Zentralverarbeitungseinheit 3 entsprechend den von dieser registrierten Betriebszuständen betätigt werden. Die Zentralverarbeitungseinheit 3 erfasst die Betriebszustände, welche durch physikalische Parameter repräsentiert werden, die in oder an dem Mobilfunkgerät wirksam werden. Sie wertet die betreffenden physikalischen Parameter, beispielsweise ein eingehendes Empfangssignal des Mobilfunks oder ein Messsignal zum Ladezustand des Akkumulators, aus und übersetzt diese in ihnen zugeordnete Betriebszustände des Gerätes. Entsprechend dieser Betriebszustände leitet die Zentralverarbeitungseinheit 3 Bewegungsmuster beziehungsweise Steuersignale zur Ansteuerung der Aktoren 1, 2 ab. Diese verursachen bei entsprechender Ansteuerung durch die Zentralverarbeitungseinheit 3 Bewegungen des Mobilfunkgerätes oder von Teilen des Mobilfunkgerätes, welche durch einen Benutzer in Form taktiler Reize wahrgenommen werden.

### Verwendete Bezugszeichen

- 1: Aktor
- 2: Aktor
- 3: Zentralverarbeitungseinheit
- 4: Gehäusewand, zum Beispiel Rückwand
- 5: Exzenterarm
- 6: Servomotor
- 7, 7': Schrittmotor
- 8, 8': Exzenterscheibe
- 9: Außenwand

## Patentansprüche

1. Verfahren zum Betreiben eines als Mobiltelefon oder Smartphone ausgebildeten Mobilfunkgeräts, nach welchem das Mobilfunkgerät einem Benutzer unterschiedliche Betriebszustände des Mobilfunkgeräts, welche durch in oder an dem Mobilfunkgerät wirkende physikalische Parameter repräsentiert und von einer Zentralverarbeitungseinheit (3) des Mobilfunkgeräts aufgrund einer Bewertung dieser physikalischen Parameter erkannt werden, mittels mindestens eines von der Zentralverarbeitungseinheit (3) entsprechend dem jeweils erkannten Betriebszustand angesteuerten Aktors (1, 2) des Mobilfunkgeräts in Form eines durch den Benutzer wahrmehmbaren einmaligen oder wiederholten taktilen Reizes signalisiert, **dadurch gekennzeichnet, dass** mittels des mindestens einen Aktors (1, 2) sowohl bei bestehendem Ruhezustand des Mobilfunkgeräts, als auch bei mindestens einem davon abweichenden Betriebszustand durch eine Animation der menschlichen Lebensfunktionen Atmung und/oder Puls- oder Herzschlag und/oder Muskeltätigkeit taktile Reize auf den Benutzer des Mobilfunkgeräts ausgeübt werden, indem der mindestens eine von der Zentralverarbeitungseinheit (3) gesteuerte Aktor (1, 2) durch eine entsprechende Bewegung des Gerätes oder einzelner Bestandteile des Gerätes das Heben und Senken des Brustkorbs und/oder den Herzoder Pulsschlag und/oder die Spannung eines Muskels simuliert, wobei der Benutzer im Ruhezustand des Mobilfunkgeräts über das Bestehen dieses Betriebszustandes durch einen periodischen taktilen Reiz ständig informiert wird.

2. Verfahren nach Anspruch 1, **dadurch gekennzeichnet, dass** ein oberhalb eines vorgegebenen Schwellwertes liegender Ladezustand mindestens eines Akkumulators oder einer Batterie des Mobilfunkgerätes zumindest in Abwesenheit eines sonstigen von ihm zu signalisierenden Betriebszustandes oder Ereignisses durch die Zentralverarbeitungseinheit (3) als Ruhezustand bewertet und durch die Animation einer durchschnittlichen Atemfrequenz und/oder einer durchschnittlichen Pulsfrequenz eines Menschen signalisiert wird.

3. Verfahren nach Anspruch 2, **dadurch gekennzeichnet, dass** in diskreten Intervallen unterhalb des vorgenannten Schwellwertes für den Ladezustand des Akkumulators oder der Batterie liegende Ladezustände durch Animation einer sich mit verringernder Ladung des Akkumulators oder der Batterie von Ladezustandsintervall zu Ladezustandsintervall verlangsamenden Atmung und/oder durch die Animation eines sich jeweils verlangsamenden Puls- oder Herzschlags signalisiert werden.

4. Verfahren nach Anspruch 3, **dadurch gekennzeichnet, dass** niedriger werdende Ladezustände durch die Vergrößerung der Amplitude einer das Heben und Senken des Brustkorbs simulierenden Bewegung eines Geräteteils im Sinne eines tiefen oder schweren Ein- und Ausatmens animiert werden.

5. Verfahren nach einem der Ansprüche 2 bis 4, **dadurch gekennzeichnet, dass** im Falle dessen, dass ein Benutzer des Gerätes innerhalb einer vorgegebenen Zeitspanne nicht die Kenntnisnahme eines ihm an dem Gerät akustisch und/oder visuell und/oder taktil signalisierten Ereignisses durch eine dafür vorgesehene Betätigung an dem Mobilfunkgerät bestätigt, ein Versäumnis des betreffenden Ereignisses durch die Animation eines erregten Zustandes in Form der Simulation einer beschleunigten Atmung und/oder eines beschleunigten Puls- oder Herzschlags signalisiert wird.

6. Verfahren nach Anspruch 5, **dadurch gekennzeichnet, dass** die Animation der beschleunigten Atmung und/oder des beschleunigten Puls- oder Herzschlags nur für eine vorgegebene oder in der Gerätekonfiguration vorgebbare Zeitdauer erfolgt und die Atmung und/oder der Puls- oder Herzschlag danach wieder in der dem Ruhezustand entsprechenden Weise simuliert werden.

7. Verfahren nach Anspruch 5 oder 6, **dadurch gekennzeichnet, dass** für die Dauer des Ausbleibens einer Bestätigung der Kenntnisnahme des eingetretenen Ereignisses durch den Benutzer des Mobilfunkgerätes ein wiederholter Wechsel zwischen der Animation des erregten Zustandes und des Ruhezustandes des Mobilfunkgerätes erfolgt.

8. Verfahren nach einem der Ansprüche 5 bis 7, **dadurch gekennzeichnet, dass** ein nicht durch Annahme oder das Drücken einer den Anruf abweisenden oder einer die Kenntnisnahme des Anrufs quittierenden Taste bestätigter eingehender Anruf durch die Zentralverarbeitungseinheit (3) des Mobilfunkgerätes als Versäumnis eines Ereignisses bewertet und dieses Versäumnis von dem Mobilfunkgerät entsprechend signalisiert wird.

9. Verfahren nach einem der Ansprüche 1 bis 9, **dadurch gekennzeichnet, dass** das Fehlen einer Netzverbindung zu einer Basisstation des Mobilfunknetzes in welchem das Mobilfunkgerät betrieben wird, an dem Mobilfunkgerät durch die Animation einer Lebensfunktion signalisiert wird.

10. Verfahren nach Anspruch 9, **dadurch gekennzeichnet, dass** das Fehlen der Netzverbindung durch die Animation einer ein oder mehrmaligen kurzzeitigen Muskelkontraktion oder durch die Animation einer einmaligen länger anhaltenden krampfartigen von einem Zittern begleiteten Muskelkontraktion signalisiert wird, wobei die Muskelkontraktion **dadurch** simuliert wird, dass sich Teile des Gerätegehäuses durch die Betätigung entsprechender Aktoren (1, 2) aufeinander zu bewegen und ein gegebenenfalls erfolgendes Zittern durch eine Vibration animiert wird.

11. Verfahren nach einem der Ansprüche 1 bis 10, **dadurch gekennzeichnet, dass** ein jeweiliger, durch die Erfassung und Auswertung in oder an dem Mobilfunkgerät wirkender physikalischer Parameter mittels der Zentralverarbeitungseinheit (3) bestimmter Betriebszustand über eine Zuordnungstabelle oder mittels eines Bayesschen Netzwerks in Bewegungsmuster zur Ansteuerung der taktil wirkenden Aktoren (1, 2) umgesetzt wird.

12. Verfahren nach Anspruch 11, **dadurch gekennzeichnet, dass** die Bewegungsmuster bezüglich ihrer Entsprechung zu den Betriebszuständen in dem Mobilfunkgerät werksseitig konfiguriert oder zur Laufzeit des Gerätes generiert werden.

13. Mobilfunkgerät mit Signalisierung unterschiedlicher Betriebszustände, ausgebildet als ein Mobiltelefon oder Smartphone, welches mindestens eine Zentralverarbeitungseinheit (3) und mindestens einen zur Signalisierung von Betriebszuständen des Mobilfunkgeräts dienenden Aktor (1, 2) aufweist, wobei die Zentralverarbeitungseinheit (3) zur Erkennung unterschiedlicher Betriebszustände durch eine Auswertung die Betriebszustände repräsentierender, an oder in dem Gerät wirkender physikalischer Parameter und zur Ansteuerung des oder der Aktoren (1, 2) zur Signalisierung der Betriebszustände ausgebildet ist und wobei durch mindestens einen der Aktoren (1, 2) Bewegungen an oder in dem Gerät erzeugt werden, welche durch einen Benutzer des Gerätes als taktile Reize wahrnehmbar sind, **dadurch gekennzeichnet, dass** einem Benutzer des Mobilfunkgerätes sowohl das Bestehen eines Ruhezustands des Mobilfunkgeräts als auch mindestens ein davon abweichender Betriebszustand jeweils mittels mindestens eines taktil wirkenden Aktors (1, 2) durch eine Animation der menschlichen Lebensfunktionen Atmung und/oder Puls- oder Herzschlag und/oder Muskeltätigkeit signalisiert wird, wobei ein Benutzer im Ruhezustand des Mobilfunkgeräts durch einen periodischen taktilen Reiz ständig über das Bestehen des Ruhezustandes informiert wird.

14. Mobilfunkgerät nach Anspruch 13, **dadurch gekennzeichnet, dass** das dieses mindestens eine vollständig oder in einem Abschnitt flexibel ausgebildete Gehäusewand (4) aufweist, welche zusammen mit einem von der Zentralverarbeitungseinheit (3) gesteuerten, aus dem Inneren des Mobilfunkgeräts wiederholt gegen die flexible Wand oder gegen den flexiblen Abschnitt der Wand bewegten Betätigungsmittel (5) einen Aktor (1) ausbildet, durch den das Heben und Senken eines Brustkorbs im Rhythmus des sich gegen die flexible Wand oder gegen den flexiblen Abschnitt bewegenden Betätigungsmittels (3) simuliert wird.

15. Mobilfunkgerät nach Anspruch 14, **dadurch gekennzeichnet, dass** das Betätigungsmittel (5) ein durch die Welle eines Servomotors (6) betätigter Exzenterarm (5) ist.

16. Mobilfunkgerät nach einem Ansprüche 13 bis 15, **dadurch gekennzeichnet, dass** in diesem zur Animation des Herzschlags zwei Schrittmotoren (7, 7') mit je einer an deren Antriebwelle montierten Exzenterscheibe (8, 8') angeordnet sind.

## Claims

1. Method for operating a mobile radio unit constructed as mobile telephone or smart phone, according to which the mobile radio unit signals to a user different operating states of the mobile radio unit which are represented by physical parameters acting in or at the mobile radio unit and detected by a central processing unit (3) of the mobile radio unit due to an evaluation of these physical parameters by means of at least one actuator (1, 2), driven by the central processing unit (3) in accordance with the respective detected operating state, of the mobile radio unit in the form of a single or repeated tactile stimulus perceptible by the user, **characterized in that** by means of the at least one actuator (1, 2), tactile stimuli are exerted on the user of the mobile radio unit by an animation of the human functions of life of breathing and/or pulse or heartbeat and/or muscle activity both with an existing idle state of the mobile radio device and with at least one operating state deviating therefrom, **in that** the at least one actuator (1, 2) controlled by the central processing unit (3) simulates the raising and lowering of the ribcage by a corresponding movement of the unit or individual components of the unit and/or simulates the heartbeat or pulse and/or the tension of a muscle, wherein the user is continuously informed by a periodic tactile stimulus about the existence of this operating state in the idle state of the mobile radio unit.

2. Method according to Claim 1, **characterized in that** a state of charge located above a predetermined threshold value of at least one accumulator or one battery of the mobile radio unit is evaluated as an idle state by the central processing unit (3) at least in the absence of any other operating state or event to be signalled by it, and is signalled by the animation of an average frequency of breathing and/or an average pulse frequency of a person.

3. Method according to Claim 2, **characterized in that** states of charge located below the aforementioned threshold value for the state of charge of the accumulator of the battery are signalled in discrete intervals by animation of breathing slowing down with reducing charge of the accumulator or of the battery from interval of state of charge to interval of state of charge and/or by the animation of a pulse or heartbeat slowing down in each case.

4. Method according to Claim 3, **characterized in that** dropping states of charge are animated by the enlargement of the amplitude of a movement, simulating the raising and lowering of the ribcage, of a part of the unit in the sense of deep or heavy breathing in and out.

5. Method according to one of Claims 2 to 4, **characterized in that** in the case where a user of the unit does not confirm having noted an event, signalled to him at the unit audibly and/or visually and/or in tactile manner by an actuation, provided for this purpose, at the mobile radio unit, missing of the relevant event is signalled by the animation of an excited state in the form of the simulation of accelerated breathing and/or accelerated pulse or heartbeat.

6. Method according to Claim 5, **characterized in that** the animation of the accelerated breathing and/or of the accelerated pulse or heartbeat only takes place for a predetermined period or one which can be predetermined in the unit configuration and the breathing and/or the pulse or heartbeat are again simulated in a manner corresponding to the idle state thereafter.

7. Method according to Claim 5 or 6, **characterized in that** for the duration of the lack of a confirmation of having noted the event which occurred by the user of the mobile radio unit, a repeated change takes place between the animation of the excited state and the idle state of the mobile radio unit.

8. Method according to one of Claims 5 to 7, **characterized in that** an incoming call not acknowledged by acceptance or pressing a key rejecting the call or a key acknowledging having noted the call is evaluated as missing an event by the central processing unit (3) of the mobile radio unit and this missing is correspondingly signalled by the mobile radio unit.

9. Method according to one of Claims 1 to 9, **characterized in that** the lack of a network connection to a base station of the mobile radio network, in which the mobile radio unit is operated, is signalled at the mobile radio unit by the animation of a life function.

10. Method according to Claim 9, **characterized in that** the lack of the network connection is signalled by the animation of a single or multiple short-term muscle contraction or by the animation of a single, longer-lasting cramp-like muscle contraction accompanied by trembling, wherein the muscle contraction is simulated by parts of the unit housing moving towards one another through the actuation of corresponding actuators (1, 2) and trembling which may take place is animated by a vibration.

11. Method according to one of Claims 1 to 10, **characterized in that** a respective operating state, determined by the detection and evaluation of physical parameters acting in or at the mobile radio unit, by means of the central processing unit (3) is converted, via an assignment table or by means of a Bayesian network, into patterns of movement for driving the actuators (1, 2) acting in a tactile manner.

12. Method according to Claim 11, **characterized in that** the patterns of movement are configured in the factory with respect to their correspondence to the operating states in the mobile radio unit or are generated at the running time of the unit.

13. Mobile radio unit comprising signalling of different operating states, constructed as a mobile telephone or smart phone which has at least one central processing unit (3) and at least one actuator (1, 2) serving for signalling operating states of the mobile radio unit, wherein the central processing unit (3) is constructed for detecting different operating states by an evaluation of physical parameters representing the operating states and acting at or in the unit, and for driving the actuator or actuators (1, 2) for signalling the operating states and wherein movements are generated at or in the unit by at least one of the actuators (1, 2), which movements are perceptible as tactile stimuli by a user of the unit, **characterized in that** both the existence of an idle state of the mobile radio unit and also at least one operating state deviating therefrom is signalled to a user of the mobile radio unit in each case by means of at least one actuator (1, 2) acting in a tactile manner through an animation of the human life functions of breathing and/or pulse or heartbeat and/or muscle activity, wherein a user is continuously informed about the existence of the idle state by periodic tactile stimulus in the idle state of the mobile radio unit.

14. Mobile radio unit according to Claim 13, **characterized in that** it has at least one housing wall (4), constructed to be flexible completely or in a section, which housing wall, together with operating means (5) controlled by the central processing unit (3) and moved repeatedly out of the interior of the mobile radio unit against the flexible wall or against the flexible section of the wall, forms an actuator (1) by means of which the raising and lowering of a ribcage in the rhythm of the operating means (5) moving against the flexible wall or against the flexible section is simulated.

15. Mobile radio unit according to Claim 14, **characterized in that** the operating means (5) is an eccentric arm (5) operated by the shaft of a servomotor (6).

16. Mobile radio unit according to one of Claims 13 to 15, **characterized in that** two stepping motors (7, 7') having in each case one eccentric disc (8, 8') mounted on their drive shaft are arranged in the mobile radio unit for animation of the heartbeat.

## Revendications

1. Procédé de mise en fonctionnement d'un appareil de téléphonie mobile se présentant sous la forme d'un téléphone mobile ou d'un téléphone intelligent, selon lequel l'appareil de téléphonie mobile signale à un utilisateur différents états de fonctionnement de l'appareil de téléphonie mobile, qui sont représentés par des paramètres physiques effectifs dans ou sur l'appareil de téléphonie mobile et qui sont détectés par une unité centrale de traitement (3) de l'appareil de téléphonie mobile sur la base d'une évaluation de ces paramètres physiques, au moyen d'au moins un actionneur respectif (1, 2) commandé par l'unité centrale de traitement (3) en correspondance avec l'état de fonctionnement détecté de l'appareil de téléphonie mobile sous la forme d'un stimulus tactile, unique ou répété, perceptible par l'utilisateur, **caractérisé en ce que** des stimuli tactiles sont exercés sur l'utilisateur de l'appareil de téléphonie mobile au moyen de l'au moins un actionneur (1, 2), dans l'état de repos existant de l'appareil de téléphonie mobile ainsi que dans au moins un état de fonctionnement différent de celui-ci, par une animation des fonctions vitales humaines que sont la respiration et/ou le pouls ou le rythme cardiaque et/ou l'activité musculaire, par le fait que l'au moins un actionneur (1, 2) commandé par l'unité centrale de traitement (3) simule par un mouvement correspondant de l'appareil ou de composants individuels de l'appareil le soulèvement et l'abaissement de la cage thoracique et/ou le rythme cardiaque ou le pouls et/ou la tension d'un muscle, l'utilisateur étant constamment informé de l'existence de cet état de fonctionnement dans l'état de repos de l'appareil de téléphonie mobile par des stimuli tactiles périodiques.

2. Procédé selon la revendication 1, **caractérisé en ce qu'**un état de charge d'au moins un accumulateur ou d'au moins une batterie de l'appareil de téléphonie mobile se situant au-dessus d'un seuil prédéterminé est évalué par l'unité centrale de traitement (3) en tant qu'état de repos au moins en l'absence d'un autre état de fonctionnement ou d'un événement devant être signalé par celui-ci et est signalé par une animation d'un rythme respiratoire moyen et/ou d'une fréquence moyenne du pouls d'une personne.

3. Procédé selon la revendication 2, **caractérisé en ce que** des états de charge se situant en dessous du seuil précité pour l'état de charge de l'accumulateur ou de la batterie sont signalés à des intervalles discrets par une animation d'une respiration qui ralentit lors d'une diminution de la charge de l'accumulateur ou de la batterie d'un intervalle de charge à l'autre et/ou par l'animation d'un ralentissement respectif du pouls du rythme cardiaque.

4. Procédé selon la revendication 3, **caractérisé en ce que** des états de charge qui diminuent sont animés sous la forme d'une augmentation de l'amplitude d'un mouvement d'une partie de l'appareil simulant le soulèvement et l'abaissement de la cage thoracique dans le sens d'une inspiration et d'une exhalation profonde ou forte.

5. Procédé selon l'une quelconque des revendication 2 à 4, **caractérisé en ce que**, dans le cas où un utilisateur de l'appareil n'a pas pu confirmer le fait qu'il a pris connaissance, au cours d'une période de temps prédéterminée, d'un événement lui ayant été signalé sur l'appareil de manière acoustique et/ou visuelle et/ou tactile en effectuant une opération prévue à cet effet sur l'appareil de téléphonie mobile, une non-survenue de l'événement en question est signalée par l'animation d'un état actif sous la forme de la simulation d'une respiration accélérée et/ou d'un pouls ou d'un rythme cardiaque accéléré.

6. Procédé selon la revendication 5, **caractérisé en ce que** l'animation de la respiration accélérée et/ou du pouls ou du rythme cardiaque accéléré ne s'effectue que pendant une période prédéterminée ou pouvant être prédéterminée dans la configuration de l'appareil et **en ce que** la respiration et/ou le pouls ou le rythme cardiaque sont ensuite de nouveau simulés d'une manière correspondant à l'état de repos.

7. Procédé selon la revendication 5 ou 6, **caractérisé en ce que** pendant la durée de l'absence d'une confirmation de la prise de connaissance par l'utilisateur de l'appareil de téléphonie mobile de l'événement qui s'est produit s'effectue par une alternance répétée entre l'animation de l'état actif et de l'état de repos de l'appareil de téléphonie mobile.

8. A Procédé selon l'une quelconque des revendication 5 à 7, **caractérisé en ce qu'**un appel entrant non confirmé par validation ou actionnement d'une touche de refus de l'appel ou d'acquittement de la prise de connaissance de l'appel, est évalué par l'unité centrale de traitement (3) de l'appareil de téléphonie mobile en tant que non-survenue d'un événement et **en ce que** cette non-survenue est signalée de manière correspondante par l'appareil de téléphonie mobile.

9. Procédé selon l'une quelconque des revendications 1 à 9, **caractérisé en ce que** l'absence d'une connexion réseau à une station de base du réseau de téléphonie mobile dans lequel l'appareil de téléphonie mobile est mis en fonctionnement est signalée à l'appareil de téléphonie mobile par l'animation d'une fonction de vitale.

10. Procédé selon la revendication 9, **caractérisé en ce que** l'absence de connexion réseau est signalée par l'animation d'une contraction musculaire de courte durée unique ou répétée ou par l'animation d'une contraction musculaire spasmodique prolongée unique accompagnée d'un tremblement, dans lequel la contraction musculaire est simulée de telle sorte que des parties du boîtier de l'appareil se déplacent l'une vers l'autre par actionnement d'actionneurs correspondants (1, 2) et **en ce qu'**un éventuel tremblement est animé par une vibration.

11. Procédé selon l'une quelconque des revendications 1 à 10, **caractérisé en ce qu'**un état de fonctionnement respectif, déterminé au moyen de l'unité centrale de traitement (3) par détection et évaluation de paramètres physiques effectifs dans ou sur l'appareil de téléphonie mobile, est transformé par l'intermédiaire d'une table d'allocation ou au moyen d'un réseau bayésien en des motifs de mouvement destinés à commander les actionneurs (1, 2) à effet tactile.

12. Procédé selon la revendication 11, **caractérisé en ce que** les motifs de mouvement sont configurés en usine par rapport à leur correspondance avec les états de fonctionnement dans l'appareil de téléphonie mobile ou sont générés lors du fonctionnement de l'appareil.

13. Appareil de téléphonie mobile avec signalisation de différents états de fonctionnement, se présentant sous la forme d'un téléphone mobile ou d'un téléphone intelligent, lequel appareil comprend au moins une unité centrale de traitement (3) et au moins un actionneur (1, 2) utilisé pour signaler des états de fonctionnement de l'appareil de téléphonie mobile, dans lequel l'unité centrale de traitement (3) est conçue pour détecter différents états de fonctionnement par une évaluation de paramètres physiques effectifs dans ou sur l'appareil qui représentent les états de fonctionnement et est conçue pour commander le ou les actionneur(s) (1, 2) pour signaler les états de fonctionnement et dans lequel des mouvements qui sont perceptibles par un utilisateur de l'appareil sous la forme de stimuli tactiles sont produits sur ou dans l'appareil par le et/ou les actionneurs (1, 2), **caractérisé en ce que** la présence d'un état de repos de l'appareil de téléphonie mobile ainsi que d'au moins un état de fonctionnement respectif différent de celui-ci est signalée à un utilisateur de l'appareil de téléphonie mobile au moyen d'au moins un actionneur (1, 2) à effet tactile respectif, par une animation des fonctions vitales humaines que sont la respiration et/ou le pouls ou le rythme cardiaque et/ou l'activité musculaire, un utilisateur étant constamment informé de l'existence de l'état de repos par des stimuli tactiles périodiques dans l'état de repos de l'appareil de téléphonie mobile.

14. Appareil de téléphonie mobile selon la revendication 13, **caractérisé en ce qu'**il comprend au moins une paroi de boîtier (4) réalisée de manière à être souple en totalité ou dans une partie de celui-ci et qui forme un actionneur (1) en association avec un moyen d'actionnement (5) commandé par l'unité centrale de traitement (3) et déplacé de manière répétée depuis l'intérieur de l'appareil de téléphonie mobile contre la paroi souple ou contre la partie souple de la paroi, actionneur au moyen duquel le soulèvement ou l'abaissement d'une cage thoracique est simulé selon le rythme du déplacement du moyen d'actionnement (5) contre la paroi souple ou contre la partie souple.

15. Appareil de téléphonie mobile selon la revendication 14, **caractérisé en ce que** le moyen d'actionnement (5) est un bras d'excentrique (5) actionné par l'arbre d'un servomoteur (6).

16. Appareil de téléphonie mobile selon l'une quelconque des revendications 13 à 15, **caractérisé en ce que** deux moteurs pas à pas (7, 7') dont chacun comprend un disque excentrique (8, 8') monté sur son arbre d'entraînement, sont disposés dans celui-ci pour l'animation du rythme cardiaque.
